(19) **Europäisches Patentamt European Patent Office Office européen des brevets**

(11) **EP 4 298 000 B1**

(12) **FASCICULE DE BREVET EUROPEEN**

(45) Date de publication et mention de la délivrance du brevet:
**26.03.2025 Bulletin 2025/13**

(21) Numéro de dépôt: **22706068.8**

(22) Date de dépôt: **20.01.2022**

(51) Classification Internationale des Brevets (IPC):
**B60W 30/14** *(2006.01)*    **B60W 30/18** *(2012.01)*
**B60W 60/00** *(2020.01)*

(52) Classification Coopérative des Brevets (CPC):
**B60W 60/0015; B60W 30/14; B60W 30/143; B60W 30/146; B60W 30/18109; B60W 30/18163; B60W 60/00;** B60W 2520/10; B60W 2552/10; B60W 2555/60; B60W 2720/103; B60W 2720/106

(86) Numéro de dépôt international:
**PCT/FR2022/050106**

(87) Numéro de publication internationale:
**WO 2022/180315 (01.09.2022 Gazette 2022/35)**

(54) **PROCEDE ET DISPOSITIF DE DETERMINATION D'UNE CONSIGNE DE DECELERATION D'UN VEHICULE AUTONOME**

VERFAHREN UND VORRICHTUNG ZUR BESTIMMUNG EINES VERZÖGERUNGSSOLLWERTS EINES AUTONOMEN FAHRZEUGS

METHOD AND DEVICE FOR DETERMINING A DECELERATION SETPOINT VALUE OF AN AUTONOMOUS VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.02.2021 FR 2101722**

(43) Date de publication de la demande:
**03.01.2024 Bulletin 2024/01**

(73) Titulaire: **Stellantis Auto SAS 78300 Poissy (FR)**

(72) Inventeurs:
• **DESCHAMPS, Vincent 92240 MALAKOFF (FR)**
• **BRACONNIER, Jean-baptiste 91120 PALAISEAU (FR)**
• **BELLE, Claire 25230 SELONCOURT (FR)**
• **FAVREAU, Eric 68290 MASEVAUX (FR)**

(74) Mandataire: **ESIP Stellantis Service REIP 2-10, boulevard de l'Europe 78300 Poissy (FR)**

(56) Documents cités:
WO-A1-2016/151213    US-A1- 2016 121 898
US-A1- 2019 126 928    US-A1- 2020 361 489

**Description**

La présente invention revendique la priorité de la demande française 2101722 déposée le 23.02.2021.

L'invention est dans le domaine des systèmes d'aide à la conduite de véhicule autonome. En particulier, l'invention concerne un procédé et dispositif de détermination d'une consigne de décélération d'un véhicule autonome, le véhicule autonome comportant un régulateur de vitesse adaptatif apte à décélérer le véhicule autonome.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Un régulateur de vitesse adaptatif est un système qui contribue à la conduite autonome. La vitesse du véhicule est régulée notamment à partir d'une vitesse et/ou accélération consigne en fonction de l'environnement extérieur et en fonction de la trajectoire que va suivre le véhicule. Une décélération est de signe contraire à une accélération. En cas de freinage, la vitesse du véhicule diminue, l'accélération est négative et la décélération est positive.

Cette régulation prend en compte une inter distance entre le véhicule et un véhicule le précédant, une vitesse limites, une géométrie de la route, ... Les informations des vitesses limites sont obtenues par anticipation classiquement par un système de navigation et/ou par une reconnaissance de panneaux de limitation de vitesse à partir d'une caméra embarquée. Ainsi, dans le cas d'une reconnaissance d'une future diminution de la vitesse limite, le régulateur de vitesse adaptatif décélère le véhicule de manière constante en fonction du temps de l'ordre de 0,7 m/s$^2$, cette décélération est dite décélération standard.

Lorsque le véhicule circule sur une première voie, par exemple une voie rapide, et doit changer de voie pour arriver une deuxième voie, par exemple une voie de sortie, avec une limitation de vitesse plus faible que celle de la voie rapide, la limitation de vitesse étant située à une distance D du début de la deuxième voie, alors le système de régulation de vitesse adaptatif décélère selon la décélération standard afin de pouvoir respecter la limitation de vitesse plus faible lorsque le véhicule sera au niveau de la limitation de vitesse plus faible

Dans certaines situations, comme par exemple lorsqu'il y a une forte différence de vitesse entre la vitesse du véhicule sur la voie rapide et la limitation de vitesse plus faible et/ou lorsque la distance D est faible, le véhicule doit réduire très fortement sa vitesse sur la voie rapide ce qui entraine des situations dangereuses.

On connait par le document US 2019/126928 A1 un dispositif de contrôle du véhicule générant un profil de vitesse pour d'un changement de voie.

Un objet de la présente invention est de remédier au problème précité, en particulier d'adopter une stratégie particulière évitant de trop décélérer le véhicule lorsqu'il circule sur la première voie.

A cet effet, un premier aspect de l'invention concerne un procédé de détermination d'une consigne de décélération d'un véhicule autonome, le véhicule autonome comportant un régulateur de vitesse adaptatif apte à décélérer le véhicule autonome selon une première décélération de consigne, dite décélération standard, le véhicule autonome circulant sur une première voie avec une première vitesse, le véhicule se dirigeant sur une deuxième voie comportant une limitation de vitesse à une distance, D, par rapport au début de la deuxième voie, ledit procédé comportant les étapes de :

- Calcul d'une décélération nécessaire, dite accélération calculée, pour décélérer le véhicule autonome, sur la distance D, de la première vitesse à une deuxième vitesse, la deuxième vitesse étant supérieure ou égale à la limitation de vitesse de la deuxième voie ;
- Détermination de la consigne de décélération du véhicule autonome

  ○ **Si la décélération** calculée est supérieure à un seuil appuyé, le seuil appuyé étant supérieur à la décélération standard, alors la consigne de décélération du véhicule autonome est égale à au seuil appuyé ;
  ○ Sinon, si la décélération calculée est supérieure à la décélération standard, alors la consigne de décélération du véhicule autonome est égale à la décélération calculée ;
  ○ Sinon la consigne de décélération est égale à la décélération standard ;

- Application par le régulateur de vitesse adaptatif de la consigne de décélération déterminée afin de décélérer le véhicule autonome à partir du début de la deuxième voie.

Ainsi, le véhicule autonome n'est pas décéléré lorsqu'il circule sur la première voie. En fonction de la décélération nécessaire, le véhicule autonome est décéléré plus fortement, au-delà de la décélération standard, qu'avec les systèmes de régulation de vitesse adaptatives classiques. La décélération ne peut pas être plus élevée qu'un seuil appuyé. Ceci entraine que la vitesse régulée du véhicule autonome circulant sur la deuxième voie est, dans certains cas, supérieure à la limitation de vitesse pendant une courte distance.

Ainsi, ce mode de fonctionnement entraine un comportement similaire à un comportement naturel d'un conducteur qui décélère lui-même un véhicule, qu'il conduit, en l'absence d'un régulateur de vitesse adaptatif.

Avantageusement, si la décélération calculée est supérieure à la décélération standard, le procédé comporte en outre les étapes de :

- détermination d'une consigne de décélération préventive du véhicule autonome, la consigne de décélération préventive étant appliquée par le régulateur de vitesse adaptatif lorsque le véhicule circule sur la première voie pour décélérer le véhicule autonome de la première vitesse à une troisième vitesse ;
- calcul d'une nouvelle décélération nécessaire pour décélérer le véhicule autonome, sur la distance D, de la troisième vitesse à la deuxième vitesse ;
- Détermination d'une nouvelle consigne de décélération du véhicule autonome

    ◦ **Si la nouvelle** décélération calculée est supérieure à un seuil appuyé, le seuil appuyé étant supérieur à la décélération standard, alors la nouvelle consigne de décélération du véhicule autonome est égale à au seuil appuyé ;
    ◦ Sinon, si la nouvelle décélération calculée est supérieure à la décélération standard, alors la nouvelle consigne de décélération du véhicule autonome est égale à la décélération calculée ;

- Application par le régulateur de vitesse adaptatif de la nouvelle consigne de décélération déterminée afin de décélérer le véhicule autonome à partir du début de la deuxième voie.

Ainsi, le véhicule autonome est décéléré sur la première voie selon un premier profil de décélération, est décéléré sur la deuxième voie selon un deuxième profil de décélération. La décélération sur la première voie étant ressentie par des occupants du véhicule autonome, ceux-ci se sentent rassurés de la bonne prise en compte du changement de voie.

Avantageusement, la troisième vitesse est une vitesse inférieure à une limitation de de vitesse sur la première voie, une vitesse inférieure à la première vitesse, ou une vitesse en début de deuxième voie telle que la nouvelle décélération calculée est inférieure ou égale au seuil appuyé.

Ainsi, le procédé rend apte à décélérer le véhicule autonome sur la première voie avec une décélération inférieure à la décélération standard. D'autre part, la décélération sur la deuxième voie devient moins forte, et donc plus confortable.

Avantageusement, la deuxième vitesse est égale à la limitation de vitesse de la deuxième voie majorée par une vitesse prédéterminée et/ou multipliée par un coefficient prédéterminé, la deuxième vitesse étant alors plus élevée que la limitation de vitesse.

Ainsi, ceci entraine que la vitesse régulée du véhicule autonome circulant sur la deuxième voie est supérieure à la limitation de vitesse pendant une courte distance lorsqu'une décélération standard n'est pas possible.

Avantageusement la décélération standard, la décélération préventive et le seuil appuyé sont compris entre 0 et 10 m/s$^2$.

Par exemple, sans être limitatif, la décélération standard est de 0,7 m /s$^2$, la décélération préventive est de 0,3 m /s$^2$, et le seuil appuyé est de 2 m /s$^2$,

Un deuxième aspect de l'invention concerne un dispositif comprenant une mémoire associée à au moins un processeur configuré pour mettre en œuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :

    [Fig. 1] illustre schématiquement un dispositif, selon un exemple particulier de réalisation de la présente invention.
    [Fig. 2] illustre schématiquement la décélération d'un véhicule selon l'état de l'art et selon un exemple particulier de réalisation de la présente invention.
    [Fig. 3] illustre schématiquement un procédé de détermination d'une consigne de décélération d'un véhicule autonome, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

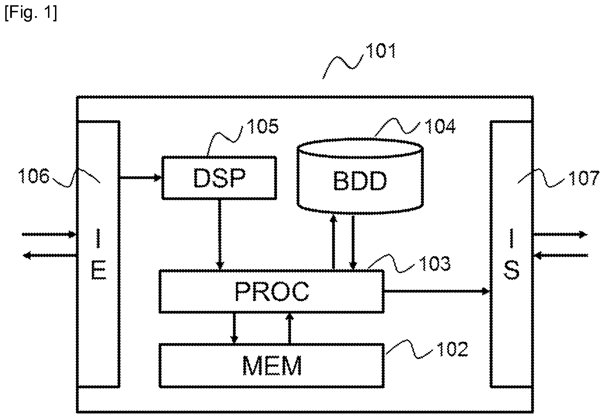

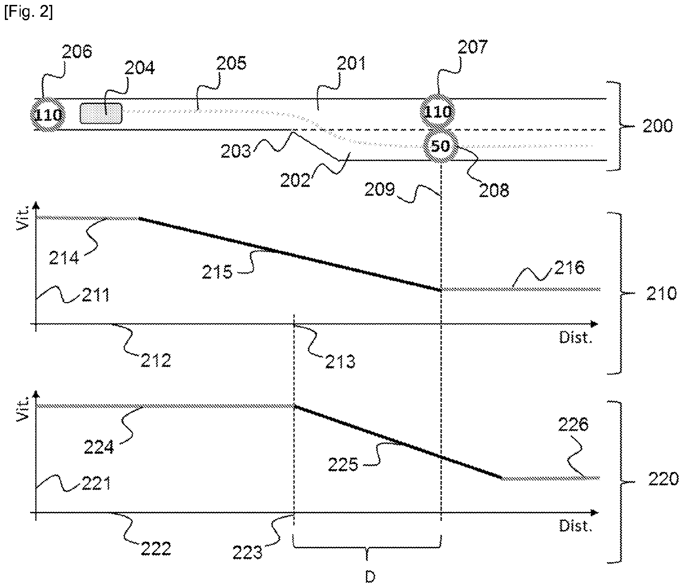

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en œuvre par un processeur 103 d'au moins une étape du procédé tel que décrit ci-avant. Le dispositif comporte aussi une mémoire de masse 104 pour le stockage de données destinées à être conservées après la mise en œuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en œuvre par le procédé selon l'invention et une interface de sortie 107 pour la transmission des données mises en œuvre par le procédé selon l'invention.

En particulier, le dispositif 101 réceptionne les données suivantes : positions, vitesses accélérations, et trajectoires du véhicule ; cartographie de la route ; position et valeur des limitations de vitesses de la route sur laquelle circule le véhicule et des routes sur lesquelles le véhicule va circuler ; positions, vitesses et accélérations des autres véhicules circulant sur la route ; etc.

Dans la cadre d'un véhicule autonome, ces données sont classiquement obtenues par : un traitement d'images acquises par des caméras ; un système de navigation associé à un système de géolocalisation et des cartographies, des systèmes de communication inter-véhicule (V2V), véhicule - infrastructure (V2I) ou autre (V2X) ; de radar et/ou lidar ; du système motopropulseur, de direction et/ou de freinage du véhicule ; etc.

Dans un mode de réalisation, l'invention transmet à travers son interface de sortie une détermination de consigne de décélération du véhicule aux systèmes cités ci-dessus.

[Fig. 2] illustre schématiquement la décélération d'un véhicule selon l'état de l'art et selon un exemple particulier de réalisation de la présente invention. La figure est découpée en 3 parties : une première 200 représentant une route vue du ciel, une deuxième 210 représentant une vitesse d'un véhicule décélérant selon l'état de l'art, et une troisième 220 représentant une vitesse d'un véhicule décélérant selon un exemple particulier de réalisation de la présente invention.

La route 200 comporte une première voie 201 et une deuxième voie 202 adjacente à la première voie 201. La deuxième voie est située à gauche ou à droite de la première voie. Le début de la deuxième voie 202 est représentée par 203. Il n'est pas nécessaire que la deuxième voie 202 accole tout son long la première voie 201. Par exemple, la première voie 201 est une voie rapide et la deuxième voie 202 est une voie de sortie.

Un véhicule 204 circule sur la route 200. La trajectoire prévue que doit suivre le véhicule est représentée par une ligne pointillée 205. Le véhicule circule sur la première voie 201 pour se rendre ensuite sur le voie 202. Par exemple, la trajectoire est issue d'un système de navigation associé à un système de géolocalisation et d'une cartographie. La cartographie comporte au moins une représentation de la route ainsi que des limitations de vitesses localisées. D'autres systèmes sont aptes à récupérer les limitations de vitesses localisées. Ces systèmes sont, par exemple, une caméra embarquée avec reconnaissance d'image comme la reconnaissance de panneaux de signalisation, une communication véhicule à véhicule, véhicule à infrastructure, ...

La première voie comporte une première limitation de vitesse représentée par 206 et 207. La deuxième voie 202 comporte une deuxième limitation de vitesse 208. La deuxième limitation de vitesse commence au niveau du trait 209.

Sur la partie 210 de la figure, un repère représente la vitesse du véhicule 204, selon l'axe 211, en fonction de la distance, selon l'axe 212. Le trait 213 reporte le début 203 de la deuxième voie 202 sur l'axe 212 de la distance. Le trait 209 reporte le début de la deuxième limitation de vitesse 208 sur l'axe 212 de la distance.

La vitesse du véhicule 204 le long de la trajectoire 205 est représentée par 3 segments. Le premier segment 214 représente une première vitesse, une vitesse du véhicule 204 circulant sur la première voie avant de décélérer, selon une décélération représentée par le deuxième segment 215, pour atteindre la deuxième limitation de vitesse 208, représentée par le segment 216.

Dans l'état de l'art, le véhicule décélère selon une première décélération de consigne, dite décélération standard. Une décélération standard est de l'ordre de 0,7 m/s$^2$. Un régulateur de vitesse adaptatif régule la vitesse du véhicule 204 selon la première décélération consigne. Dans certaines situations, connaissant la vitesse à atteindre, sachant la première décélération consigne, le véhicule 204 commence à décélérer sur la première voie 205. Ceci amène des situations dangereuses lorsque la vitesse du véhicule 204 est soit très inférieure à la première limitation de vitesse, soit très précoce par rapport au début 203 de la deuxième voie 202.

Sur la partie 220 de la figure, un repère représente la vitesse du véhicule 204, selon l'axe 221, en fonction de la distance, selon l'axe 222. Le trait 223 reporte le début 203 de la deuxième voie 202 sur l'axe 222 de la distance. Le trait 209 reporte le début de la deuxième limitation de vitesse 208 sur l'axe 222 de la distance. L'écart entre le début 203 de la deuxième voie 202 et le début de la deuxième limitation de vitesse 208 est une distance notée D.

La vitesse du véhicule 204 le long de la trajectoire 205 est représentée par 3 nouveaux segments. Le premier segment 224 représente une première vitesse, une vitesse du véhicule 204 circulant sur la première voie avant de décélérer, selon une décélération représentée par le deuxième segment 225, pour atteindre la deuxième limitation de vitesse 208, représentée par le segment 226.

La décélération 225 est plus pentu que la décélération standard 215. La décélération est plus forte dans le cas d'usage décrit dans la troisième partie 220.

Dans le cas d'usage décrit dans la troisième partie 220, la décélération est plus forte (donc plus grande, plus positive) que la décélération décrite dans le cas d'usage de la deuxième partie 210. Par analogie, Dans le cas d'usage décrit dans la troisième partie 220, l'accélération est plus faible (donc plus petite, plus négative) que l'accélération décrite dans le cas d'usage de la deuxième partie 210.

La vitesse du véhicule 204 à l'emplacement 209 de la deuxième limitation de vitesse 208 est supérieure à la deuxième limitation de vitesse 208. Il n'y pas de décélération sur la première voie.

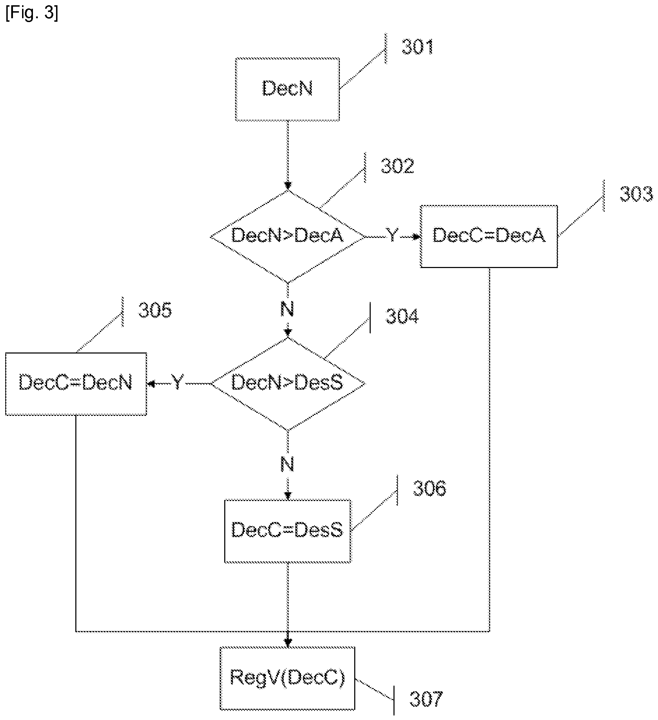

La figure 3 illustre schématiquement un procédé de détermination d'une consigne de décélération d'un véhicule autonome, selon un exemple particulier de réalisation de la présente invention.

L'étape 301, DecN, est une étape de calcul d'une décélération nécessaire, dite décélération calculée, pour décélérer le véhicule autonome, sur la distance D, de la première vitesse à une deuxième vitesse, la deuxième vitesse étant supérieure ou égale à la limitation de vitesse de la deuxième voie.

Par exemple, la décélération calculée, $y_c$ est

égale à $\gamma_c = -\frac{V_1^2 - V_2^2}{2*D}$ , où $V_1$ est la première vitesse, $V_2$ est la deuxième vitesse, et D est la distance. La décélération calculée est positive lorsque $V_1 > V_2$.

Selon un choix de conception, un choix de l'utilisateur du véhicule, une réglementation, ..., par exemple, la deuxième vitesse est égale à la deuxième limitation de vitesse, est égale à la deuxième limitation de vitesse majorée par une valeur prédéfinie, 5 km/h par exemple, ou bien est égale à un coefficient prédéfini qui multiplie la deuxième vitesse limite, 1,05 par exemple pour ajouter 5% à la deuxième vitesse limite. La deuxième vitesse peut également être une combinaison des deux derniers exemples ci-dessus.

Les étapes 302 à 306 sont un exemple de l'étape de détermination de la consigne de décélération du véhicule autonome.

L'étape 302, DecN>DecA, est l'étape où on teste si la décélération calculée est supérieure à un seuil appuyé, le seuil appuyé étant supérieur à la décélération standard. Par exemple, une décélération standard est de l'ordre de 0,7 m/s$^2$ et un seuil appuyé, donc correspondant à une décélération appuyée, est de l'ordre de 2 m/s$^2$.

Dans l'affirmatif, on passe dans l'étape 303, DeC=DecA, où la consigne de décélération du véhicule autonome est alors égale à au seuil appuyé.

L'étape 304, DecN>DeS, est l'étape où on teste si la décélération calculée est supérieure à la décélération standard.

Dans l'affirmatif, on passe dans l'étape 305, DeC=DecN, où la consigne de décélération du véhicule autonome est alors égale à la décélération calculée

On arrive dans l'étape 306, DecC=DesS, où la consigne de décélération est égale à la décélération standard.

L'étape 307, Reg(DecC), est l'étape où le régulateur de vitesse adaptatif applique la consigne de décélération déterminée afin de décélérer le véhicule autonome à partir du début de la deuxième voie.

Avantageusement, dans l'étape 301, la deuxième vitesse est tout d'abord égale à la deuxième limitation de vitesse. Si la décélération calculée est supérieure à la décélération standard, alors l'étape 301 est relancée avec une deuxième vitesse strictement supérieure à la deuxième limitation de vitesse, selon les modes opératoires déjà décrits.

Avantageusement, si la décélération calculée est supérieure à la décélération standard, le procédé selon l'invention comporte en outre les étapes de :

• détermination d'une consigne de décélération préventive du véhicule autonome, la consigne de décélération préventive étant appliquée par le régulateur de vitesse adaptatif lorsque le véhicule circule sur la première voie pour décélérer le véhicule autonome de la première vitesse à une troisième vitesse ;
• calcul d'une nouvelle décélération nécessaire pour décélérer le véhicule autonome, sur la distance D, de la troisième vitesse à la deuxième ;
• Détermination d'une nouvelle consigne de décélération du véhicule autonome

  ◦ Si la nouvelle décélération calculée est supérieure à un seuil appuyé, le seuil appuyé étant supérieur à la décélération standard, alors la nouvelle consigne de décélération du véhicule autonome est égale à au seuil appuyé ;
  ◦ Sinon, si la nouvelle décélération calculée est supérieure à la décélération standard, alors la nouvelle consigne de décélération du véhicule autonome est égale à la décélération calculée ;

• Application par le régulateur de vitesse adaptatif de la nouvelle consigne de décélération déterminée afin de décélérer le véhicule autonome à partir du début de la deuxième voie.

Ainsi, au lieu de passer directement de l'étape 303, ou de l'étape 305, à l'étape 307, une consigne de décélération préventive et une nouvelle consigne de décélération sont calculées. Le véhicule est décéléré à la deuxième vitesse en deux temps.

Dans un premier temps, la consigne décélération préventive est calculée. Cette décélération est appliquée par le régulateur de vitesse lorsque le véhicule circule sur la première voie. Le véhicule est alors décéléré de la première vitesse à une troisième vitesse.

Avantageusement, la troisième vitesse est une vitesse inférieure à une limitation de de vitesse sur la première voie, une vitesse inférieure à la première vitesse, ou une vitesse en début de deuxième voie telle que la nouvelle décélération calculée est inférieure ou égale au seuil appuyé.

Par exemple, la troisième vitesse est égale à 90% de la limitation de vitesse de la première voie, ou est égale à 90% de la première vitesse, ou est égale à la limitation de vitesse de la première voie minorée de 10 km/h, ou est égale à la première vitesse minorée de de 10 km/h, ... Dans un autre exemple, la consigne de décélération préventive est de l'ordre de 0,3 m/s$^2$, ou est fonction de la distance D et de l'écart entre la première vitesse et de la deuxième vitesse.

Dans un deuxième temps, une nouvelle consigne de déclaration est déterminée en fonction de la troisième vitesse et de la deuxième vitesse. Le véhicule est alors décéléré de la troisième vitesse à la deuxième vitesse, le régulateur de vitesse adaptative ayant reçu une nouvelle consigne de déclaration.

Avantageusement, la deuxième vitesse est égale à la limitation de vitesse de la deuxième voie majorée par une vitesse prédéterminée et/ou multipliée par un coefficient prédéterminé, la deuxième vitesse étant alors plus élevée que la limitation de vitesse.

Par exemple, la deuxième vitesse est égale à la deuxième limitation de vitesse majorée par une valeur prédéfinie, 5 km/h par exemple, ou bien est égale à un coefficient prédéfini qui multiplie la deuxième vitesse limite, 1,05 par exemple pour ajouter 5% à la deuxième vitesse limite. La deuxième vitesse peut également être une combinaison des deux derniers exemples ci-dessus.

Une forme de réalisation de la présente invention a été décrit ci-avant. D'autres formes de réalisation sont possibles.

Ainsi, on a décrit ci-avant un exemple de réalisation dans lequel une consigne de décélération est fonction de la distance D, distance entre le début de la deuxième voie et le début de la deuxième limitation de vitesse. Dans un autre mode opératoire, le début de la distance D est en aval ou en amont du début de la deuxième voie. Dans un autre mode opératoire, la fin de la distance est en aval ou en amont du début de la deuxième limitation de vitesse.

**Revendications**

1. Procédé de détermination d'une consigne de décélération d'un véhicule autonome (204), le véhicule autonome (204) comportant un régulateur de vitesse adaptatif apte à décélérer le véhicule autonome selon une première décélération de consigne (215), dite décélération standard, le véhicule autonome (204) circulant sur une première voie (201) avec une première vitesse, le véhicule se dirigeant sur une deuxième voie (202) comportant une limitation de vitesse (208) à une distance, D, par rapport au début (203) de la deuxième voie (202), ledit procédé comportant les étapes de :

   • Calcul (301) d'une décélération nécessaire, dite accélération calculée, pour décélérer le véhicule autonome, sur la distance D, de la première vitesse à une deuxième vitesse, la deuxième vitesse étant supérieure ou égale à la limitation de vitesse (208) de la deuxième voie (202) ;
   • Détermination de la consigne de décélération du véhicule autonome (204)

   ◦ Si (302) la décélération calculée est supérieure à un seuil appuyé, le seuil appuyé étant supérieur à la décélération standard, alors (303) la consigne de décélération du véhicule autonome est égale à au seuil appuyé ;
   ◦ Sinon, si (304) la décélération calculée est supérieure à la décélération standard, alors (305) la consigne de décélération du véhicule autonome est égale à la décélération calculée ;
   ◦ Sinon (306) la consigne de décélération est égale à la décélération standard ;

   • Application (307) par le régulateur de vitesse adaptatif de la consigne de décélération déterminée afin de décélérer le véhicule autonome (204) à partir du début (203) de la deuxième voie (202).

2. Procédé selon la revendication 1, dans lequel, si la décélération calculée est supérieure à la décélération standard, le procédé comporte en outre les étapes de :

   • détermination d'une consigne de décélération préventive du véhicule autonome (204), la consigne de décélération préventive étant appliquée par le régulateur de vitesse adaptatif lorsque le véhicule autonome (204) circule sur la première voie (201) pour décélérer le véhicule autonome de la première vitesse à une troisième vitesse ;
   • calcul d'une nouvelle décélération nécessaire pour décélérer le véhicule autonome (204), sur la distance D, de la troisième vitesse à la deuxième vitesse ;
   • Détermination d'une nouvelle consigne de décélération du véhicule autonome (204)

   ◦ Si la nouvelle décélération calculée est supérieure à un seuil appuyé, le seuil appuyé étant supérieur à la décélération standard, alors la nouvelle consigne de décélération du véhicule autonome (204) est égale à au seuil appuyé ;
   ◦ Sinon, si la nouvelle décélération calculée est supérieure à la décélération standard, alors la nouvelle consigne de décélération du véhicule autonome (204) est égale à la

décélération calculée ;

• Application par le régulateur de vitesse adaptatif de la nouvelle consigne de décélération déterminée afin de décélérer le véhicule autonome (204) à partir du début de la deuxième voie.

3. Procédé selon la revendication 2, dans lequel la troisième vitesse est une vitesse inférieure à une limitation de de vitesse (206) sur la première voie (201), une vitesse inférieure à la première vitesse, ou une vitesse en début de deuxième voie telle que la nouvelle décélération calculée est inférieure ou égale au seuil appuyé.

4. Procédé selon l'une des revendications précédentes, dans lequel la deuxième vitesse est égale à la limitation de vitesse (208) de la deuxième voie (202) majorée par une vitesse prédéterminée et/ou multipliée par un coefficient prédéterminé, la deuxième vitesse étant alors plus élevée que la limitation de vitesse.

5. Procédé selon l'une des revendications précédentes, dans lequel la décélération standard, la décélération préventive et le seuil appuyé sont compris entre 0 et 10 m/s$^2$.

6. Dispositif (101) comprenant une mémoire (102) associée à au moins un processeur (103) configuré pour mettre en œuvre le procédé selon l'une des revendications précédentes.

7. Véhicule comportant le dispositif selon la revendication précédente.

8. Programme d'ordinateur comprenant des instructions adaptées pour l'exécution des étapes du procédé selon l'une des revendications 1 à 5 lorsque ledit programme est exécuté par au moins un processeur (103).

**Patentansprüche**

1. Verfahren zur Bestimmung eines Verzögerungssollwerts eines autonomen Fahrzeugs (204), wobei das autonome Fahrzeug (204) einen adaptiven Geschwindigkeitsregler aufweist, der geeignet ist, das autonome Fahrzeug gemäß einer ersten Soll-Verzögerung (215), der so genannten Standardverzögerung, zu verzögern, wobei das autonome Fahrzeug (204) auf einer ersten Fahrspur (201) mit einer ersten Geschwindigkeit fährt, wobei das Fahrzeug auf einer zweiten Fahrspur (202) fährt, die eine Geschwindigkeitsbegrenzung (208) in einem Abstand D von dem Anfang (203) der Zweiter Kanal (202), wobei das Verfahren die folgenden Schritte umfasst:

- Berechnung (301) einer zur Verzögerung des autonomen Fahrzeugs über die Strecke D von der ersten Geschwindigkeit auf eine zweite Geschwindigkeit erforderlichen Verzögerung, der so genannten berechneten Beschleunigung, wobei die zweite Geschwindigkeit größer oder gleich der Geschwindigkeitsbegrenzung (208) des zweiten Gleises (202) ist;
- Bestimmung des Verzögerungssollwerts des autonomen Fahrzeugs (204)

&cir; wenn (302) die berechnete Verzögerung größer als ein abgestützter Schwellenwert ist, wobei der abgestützte Schwellenwert größer als die Standardverzögerung ist, dann (303) ist der Verzögerungssollwert des autonomen Fahrzeugs gleich dem abgestützten Schwellenwert;
&cir; Andernfalls, wenn (304) die berechnete Verzögerung größer als die Standardverzögerung ist, dann (305) ist der Verzögerungssollwert des autonomen Fahrzeugs gleich der berechneten Verzögerung;
&cir; Andernfalls (306) ist der Verzögerungssollwert gleich der Standardverzögerung;

- Anwendung (307) des ermittelten Verzögerungssollwertes durch den adaptiven Geschwindigkeitsregler zur Verzögerung des autonomen Fahrzeugs (204) ab dem Beginn (203) des zweiten Gleises (202).

2. Verfahren nach Anspruch 1, wobei, wenn die berechnete Verzögerung größer als die Standardverzögerung ist, das Verfahren ferner die folgenden Schritte umfasst:

- Bestimmung eines präventiven Verzögerungssollwerts des autonomen Fahrzeugs (204), wobei der präventive Verzögerungssollwert vom adaptiven Geschwindigkeitsregler angewendet wird, wenn das autonome Fahrzeug (204) auf der ersten Spur (201) fährt, um das autonome Fahrzeug von der ersten Geschwindigkeit auf eine dritte Geschwindigkeit zu verzögern;
- Berechnung einer neuen Verzögerung, die erforderlich ist, um das autonome Fahrzeug (204) über die Strecke D von der dritten Geschwindigkeit auf die zweite Geschwindigkeit zu verzögern;
- Festlegung einer neuen Vorgabe für die Verzögerung des autonomen Fahrzeugs (204)

&cir; wenn die neu berechnete Verzögerung größer als ein ausgeprägter Schwellenwert ist und der ausgeprägte Schwellenwert größer als die Standardverzögerung ist, dann entspricht der neue Ausrolleinstellwert des autonomen Fahrzeugs (204) dem ausgeprägten Schwellenwert;
◦ wenn die neu berechnete Verzögerung größer als die Standardverzögerung ist, dann ist der neue Verzögerungssollwert des autonomen Fahrzeugs (204) gleich der berechneten Verzögerung;

- Anwendung des neu bestimmten Verzögerungssollwertes durch den adaptiven Geschwindigkeitsregler zur Verzögerung des autonomen Fahrzeugs (204) ab Beginn des zweiten Gleises.

3. Verfahren nach Anspruch 2, wobei die dritte Geschwindigkeit eine Geschwindigkeit ist, die kleiner ist als eine Geschwindigkeitsbegrenzung (206) auf dem ersten Kanal (201), eine Geschwindigkeit, die kleiner ist als die erste Geschwindigkeit, oder eine Geschwindigkeit zu Beginn des zweiten Kanals, sodass die neu berechnete Verzögerung kleiner oder gleich dem gedrückten Schwellenwert ist.

4. Verfahren nach einem der vorhergehenden Ansprüche, bei dem die zweite Geschwindigkeit gleich der Geschwindigkeitsbegrenzung (208) des zweiten Kanals (202) ist, die mit einer vorbestimmten Geschwindigkeit erhöht und/oder mit einem vorbestimmten Koeffizienten multipliziert wird, wobei die zweite Geschwindigkeit dann höher als die Geschwindigkeitsbegrenzung ist.

5. Verfahren nach einem der vorhergehenden Ansprüche, bei dem die Standardverzögerung, die präventive Verzögerung und der gedrückte Schwellenwert im Bereich von 0 bis 10 m/s$^2$ liegen.

6. Vorrichtung (101) mit einem Speicher (102), der mindestens einem Prozessor (103) zugeordnet ist, der so konfiguriert ist, dass er das Verfahren nach einem der vorhergehenden Ansprüche ausführt.

7. Fahrzeug mit der Vorrichtung nach dem vorhergehenden Anspruch.

8. Computerprogramm mit Befehlen, die zur Ausführung der Schritte des Verfahrens nach einem der Ansprüche 1 bis 5 geeignet sind, wenn das Programm von mindestens einem Prozessor (103) ausgeführt wird.

**Claims**

1. Method for determining a deceleration setpoint of an autonomous vehicle (204), the autonomous vehicle (204) comprising an adaptive cruise control capable of decelerating the autonomous vehicle according to a first setpoint deceleration (215), called standard deceleration, the autonomous vehicle (204) traveling on a first lane (201) with a first speed, the vehicle heading on a second lane (202) comprising a speed limitation (208) at a distance, D, with respect to the start (203) of the second lane channel (202), said method comprising the steps of:

- calculation (301) of a necessary deceleration, called calculated acceleration, to decelerate the autonomous vehicle, over distance D, from the first speed to a second speed, the second speed being greater than or equal to the speed limitation (208) of the second track (202);
- determination of the deceleration setpoint of the autonomous vehicle (204)

◦ if (302) the calculated deceleration is greater than a supported threshold, the supported threshold being greater than the standard deceleration, then (303) the deceleration setpoint of the autonomous vehicle is equal to the supported threshold;
◦ otherwise, if (304) the calculated deceleration is greater than the standard deceleration, then (305) the deceleration setpoint of the autonomous vehicle is equal to the calculated deceleration;
◦ otherwise (306) the deceleration setpoint is equal to the standard deceleration;

- application (307) by the adaptive cruise control of the determined deceleration setpoint in order to decelerate the autonomous vehicle (204) from the start (203) of the second lane (202).

2. Method according to claim 1, wherein, if the calculated deceleration is greater than the standard deceleration, the method further comprises the steps of:

- determining a preventive deceleration setpoint of the autonomous vehicle (204), the preventive deceleration setpoint being applied by the adaptive cruise control when the autonomous vehicle (204) is traveling on the first lane (201) to decelerate the autonomous vehicle from the first speed to a third speed;
- calculation of a further deceleration necessary to decelerate the autonomous vehicle (204), over distance D, from the third speed to the second speed;
- determination of a new deceleration setpoint for the autonomous vehicle (204)

◦ if the calculated new deceleration is greater than a supported threshold, the supported threshold being greater than the standard deceleration, then the new deceleration setpoint of the autonomous vehicle (204) is equal to the supported threshold;
  ◦ otherwise, if the calculated new deceleration is greater than the standard deceleration, then the calculated new deceleration setpoint of the autonomous vehicle (204) is equal to the calculated deceleration;

- application by the adaptive cruise control of the new deceleration setpoint determined in order to decelerate the autonomous vehicle (204) from the start of the second lane.

3. Method according to claim 2, wherein the third speed is a speed lower than a speed limit (206) on the first channel (201), a speed lower than the first speed, or a speed at the start of the second channel such that the calculated new deceleration is less than or equal to the pressed threshold.

4. Method as claimed in claim 1, wherein the second speed is equal to the speed limit (208) of the second channel (202) increased by a predetermined speed and/or multiplied by a predetermined coefficient, the second speed then being higher than the speed limit.

5. Process according to one of the preceding claims, in which the standard deceleration, the preventive deceleration and the supported threshold are between 0 and 10 m/s$^2$.

6. Device (101) comprising a memory (102) associated with at least one processor (103) configured to implement the method according to one of the preceding claims.

7. Vehicle comprising the device according to the preceding claim.

8. Computer program comprising instructions suitable for executing the steps of the method according to one of claims 1 to 5 when said program is executed by at least one processor (103).

[Fig. 1]

EP 4 298 000 B1

[Fig. 2]

11

[Fig. 3]

**EP 4 298 000 B1**

**RÉFÉRENCES CITÉES DANS LA DESCRIPTION**

**Documents brevets cités dans la description**

- FR 2101722
- US 2019126928 A1